# EUROPEAN PATENT APPLICATION

(11) **EP 1 489 320 A1**
(43) Date of publication of application: **22.12.2004**
(21) Application number: 03705307.1
(22) Date of filing: 19.02.2003
(51) Int. Cl.: F16C 33/78, F16C 33/76, F16C 19/18, B60B 35/18

(54) **ROLLING BEARING UNIT FOR SUPPORTING WHEEL**

(30) Priority: 19.02.2002 JP 2002042047
(71) Applicant: NSK LTD.,, Shinagawa-ku, Tokyo 141-8560 (JP)
(72) Inventor: SAKAMOTO, Junshi, NSK LTD., Fujisawa-shi, Kanagawa 251-0021 (JP)
(74) Representative: Klingseisen, Franz, Dipl.-Ing.
(86) International application number: PCT/JP2003/001759
(87) International publication number: WO 2003/071147

(57) **Abstract**

With regard to the rolling bearing unit for supporting a vehicle wheel, the traveling performance represented by acceleration performance and fuel consumption performance is improved by reducing the rotational torque of a hub rotating together with a wheel. An opening at an inside end of a space where balls 14 are placed is closed by a cap 17a, and another opening at an outside end thereof is sealed by a seal ring 16c having three seal lips. The rotational resistance of the seal ring 16c is limited within a range of 0.03 to 0.2 N·m resulting from the friction between the respective seal lips and the counterpart surfaces.

## Description

### FIELD OF THE INVENTION

This invention relates to an improvement of a rolling bearing unit for rotatably supporting a vehicle wheel, particularly a non-driven wheel (a front wheel of an FR or RR vehicle, or a rear wheel of an FF vehicle), with reference to a suspension device of a motor vehicle.

### BACKGROUND OF THE INVENTION

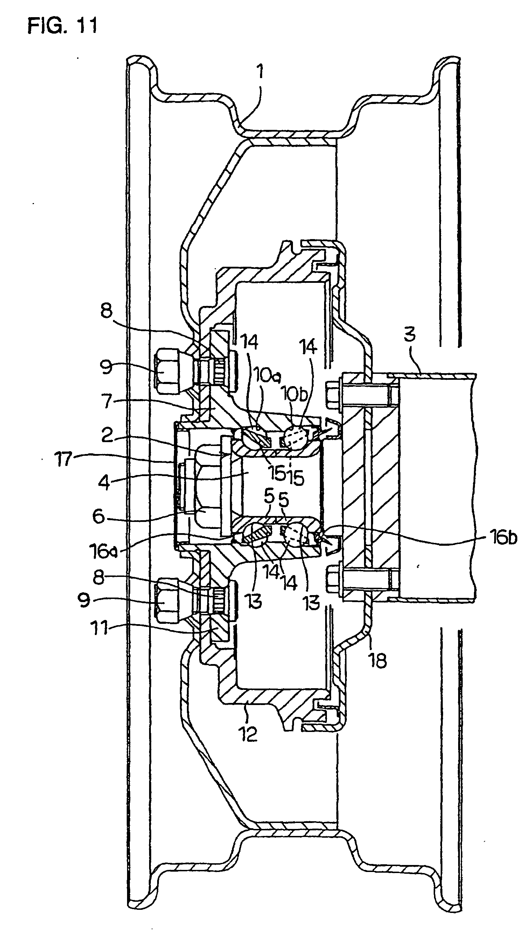

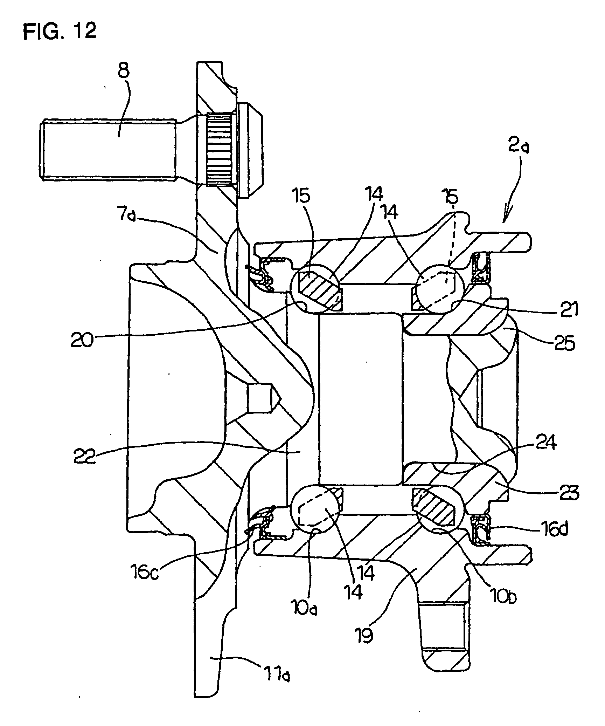

As a rolling bearing unit for supporting vehicle wheel, for example, JP Patent Unexamined Publication No. 2001-221243 discloses the structures as illustrated in Figs. 11 and 12. In the structure of the first example shown in Fig. 11, a vehicle wheel 1 is rotatably supported by the rolling bearing unit 2 at an end portion of a shaft 3 as a part of a suspension device. Namely, inner rings 5 as stationary rings of the rolling bearing unit 2 are fitted and secured around a support shaft 4 fixed to the end portion of the shaft 3 by nuts 6. On the other hand, the wheel 1 is securely connected to a hub 7, which is a rotating ring of the rolling bearing unit 2, by a plurality of studs 8 and nuts 9.

Double-row outer-ring raceways 10a and 10b, which are rotating raceways respectively, are formed around the inner peripheral surface of the hub 7, and an attachment flange 11 is formed around the outer peripheral surface of the hub 7 respectively. The wheel 1 is securely connected to one side surface of the attachment flange 11 (the outside surface in the figure), together with a drum 12 of a braking device, by the respective studs 8 and the nuts 9.

A plurality of balls 14, which are rolling members respectively, are rotatably supported, with retainers 15 holding these balls, between each of the outer-ring raceways 10a and 10b and the respective inner-ring raceways 13 which are stationary raceways respectively formed around the outer peripheral surface of the inner rings 5. With the respective components as assembled in this manner, a double-row angular type ball bearing is formed in a back-to-back combination fashion in which the hub 7 is rotatably supported around the respective inner rings 5 to receive a radial load and a thrust load. Seal rings 16a and 16b are provided between the inner peripheral surface of both ends of the hub 7 and the outer peripheral surface of the end portion of the respective inner rings 5, such that the space where the balls 14 are placed is sealed from the external space. Furthermore, an opening at the outside end 5 of the hub 7 is closed by a cap 17 (the outside in the axial direction means the side which is on the outside in the width direction of the vehicle when the bearing unit is installed in the vehicle, and the inside means the side which is on the center in the width direction, which definitions are applicable throughout this specification).

When using the rolling bearing unit 2 for supporting vehicle wheel as described above, as illustrated in Fig. 11, the support shaft 4 around which the inner rings 5 are fitted is fixed to the shaft 3, while the wheel 1 combined with a tire not shown in the figure and the drum 12 are fixed to the attachment flange 11 of the hub 7. Also, a drum brake for braking is constructed by combining the drum 12 with a wheel cylinder and shoes, not shown in the figure, which are supported by a backing plate 18 fixed to the end portion of the shaft 3. During a braking operation, a pair of the shoes provided on the radial inside of the drum 12 is pressed against the inner peripheral surface of this drum 12.

On the other hand, in the second example of the conventional structure as illustrated in Fig. 12, a hub 7a of the bearing unit 2a as a rotating ring is rotatably supported on the radial inside of an outer ring 19 as a stationary ring by way of a plurality of balls 14 which are rolling members respectively. For this purpose, there are provided double-row outer raceways 10a and 10b respectively as a stationary raceways around the inner peripheral surface of the outer ring 19, and first and second inner raceways 20 and 21 respectively serving as a rotating raceways around the outer peripheral surface of the hub 7a. This hub 7a is formed by combining a hub body 22 with an inner ring 23. An attachment flange 11a for supporting a wheel is formed around the outer peripheral surface at the outside end portion of the hub body 22, the first inner raceway 20 is formed around the outer peripheral surface in the middle portion of the hub body 22, and a small diameter stepped section 24 having a diameter smaller than that of the portion provided with the first inner raceway 20 is formed around the outer peripheral surface in the middle portion close to the inner end of the hub body 22. The inner ring 23, having the second inner raceway 21 whose cross-sectional shape is a circular arc shape around the outer peripheral surface thereof, is fitted around the small diameter stepped section 24. Furthermore, an inside end portion of the hub body 22 forms a crimped section 25 that is plastically deformed outward in the radial direction, and the inner ring 23 is fixed to the hub body 22 by retaining the inside end of the inner ring 23 by the crimped section 25. Moreover, seal rings 16c and 16d are interposed between each of the both ends of the inner peripheral surface of the outer ring 19 and each of the corresponding opposite portions, that is, the outer peripheral surface at the middle portion of the hub body 22 and the outer peripheral surface at the inside end portion of the inner ring 23, so as to seal, from the external space, the internal space where the respective balls 14 are provided between the inner peripheral surface of the outer ring 19 and the outer peripheral surface of the hub 7a.

In the case of the prior art structure as discussed above, since the seal rings 16a and 16b (or 16c and 16d) are located in the openings at both ends of the internal space where the respective balls 14 are located, it is inevitable to increase the torque (i.e., the rotational resistance of the rolling bearing unit for supporting a vehicle wheel) required for the rotation of the hub 7 (or 7a). On the other hand, it is known in the prior art to seal the internal space from the external space by closing one end of the internal space with a cap and providing a seal ring only at the other end in the axial direction, for example, as described in JP Patent Unexamined Publication No. 2001-241450.

However, since the rotational resistance of the seal ring is not necessarily low in the case of the conventional rolling bearing unit, the rolling resistance thereof cannot be sufficiently lowered. This results in the deterioration of the traveling performance represented by acceleration performance and fuel consumption performance, and therefore improvement is desired in light of the recent energy saving requirement.

In addition to the structure described in JP Patent Unexamined Publication No. 1998(H10)-252762 in which the interference of seal lip is improved, several structures are contemplated in the prior art to reduce the resistance of the portion contacting the seal ring and thereby reduce the rotational torque of the rolling bearing, for example, by improving the type of ball bearing, the preload level, the configurations of the respective components, the internal design such as the contact angle and the curvature radius of the raceways, the type of grease, the profile and material of the seal ring and so forth. However, it is troublesome to appropriately control these factors in associating them with each other, so as to secure necessary seal performance, and also to reduce the rotational torque. Because of this, there is needed to realize the structure for easily reducing the rotational torque of the rolling bearing unit for supporting a vehicle wheel.

The rolling bearing unit for supporting a vehicle wheel according to the present invention is made taking into consideration the above circumstances.

### SUMMARY OF THE INVENTION

The rolling bearing unit for supporting a vehicle wheel according to the present invention is provided with a stationary ring, a rotating ring, a plurality of rolling members, a cap and a seal ring, in the same manner as the above rolling bearing unit known in the prior art.

The stationary ring is supported by and fixed to a suspension device when being used.

Also, the rotating race serves to fixedly support a wheel when being used.

Also, the respective rolling members are provided between stationary raceways and rotating raceways which are formed around the peripheral surfaces of these stationary and rotating rings which face each other.

Also, the cap is provided for closing the entirety of an opening at one end in the axial direction of either the stationary ring or the rotating ring which is located on the radially outer side.

Furthermore, the seal ring is provided for sealing a space where the respective rolling members are placed between the peripheral surfaces of the stationary ring and rotating ring which face each other at the other end in the axial direction opposite the cap.

And, the seal ring is provided with two or three seal lips each of which is made of an elastic material.

Particularly, in the case of the rolling bearing unit according to the present invention, the rotational resistance of the seal ring resulting from the friction between the respective seal lips and the counterpart surfaces is from 0.03 to 0.2 N·m.

According to the rolling bearing unit of the present invention configured as described above, it is possible to sufficiently reduce the rotational torque while maintaining the necessary sealing performance. Namely, since the rotational resistance of the seal ring is lowered up to 0.2 N·m, it is possible to reduce the rotational torque of the whole rolling bearing unit.

On the other hand, since the rotational resistance of the above seal ring is at least 0.03 N·m, it is possible to secure necessary sealing performance (mainly, muddy water proof performance for preventing muddy water from entering).

Namely, from the result of the experiments conducted by the inventors of the present invention, it is found that the sealing performance can be verified in accordance with the value of the rotational resistance of the seal ring irrespective of the structure of the seal ring such as the profile and material thereof, as long as the number of the seal lips is two or three. It is also found that necessary sealing performance can be obtained by setting the rotational resistance of the above seal ring to at least 0.03 N·m.

Accordingly, in the case of the rolling bearing unit of the present invention in which the rotational resistance of the seal ring is from 0.03 to 0.2 N·m, it is understood that the rotational torque can be sufficiently reduced while maintaining the necessary sealing performance.

### BRIEF DESCRIPTION OF DRAWINGS

Fig. 1 is a sectional view showing a first example of the structure of the rolling bearing unit according to the present invention.
Fig. 2 is a half portion sectional view showing a second example of the structure of the rolling bearing unit according to the present invention.
Fig. 3 is a half portion sectional view showing a third example of the structure of the rolling bearing unit according to the present invention.
Fig. 4 is a partial sectional view showing a first example of the specific structure of a seal ring to which the present invention can be applied.
Fig. 5 is a partial sectional view showing a second example of the specific structure of a seal ring to which the present invention can be applied.
Fig. 6 is a partial sectional view showing a third example of the specific structure of a seal ring to which the present invention can be applied.
Fig. 7 is a partial sectional view showing a fourth example of the specific structure of a seal ring to which the present invention can be applied.
Fig. 8 is a partial sectional view showing a fifth example of the specific structure of a seal ring to which the present invention can be applied.
Fig. 9 is a partial sectional view showing a sixth example of the specific structure of a seal ring to which the present invention can be applied.
Fig. 10 is a partial sectional view showing a seventh example of the specific structure of a seal ring to which the present invention can be applied.
Fig. 11 is a sectional view showing a first example of the conventional rolling bearing unit as attached in a suspension device.
Fig. 12 is a sectional view showing a second example of the conventional rolling bearing unit.

### DETAILED DESCRIPTION OF THE PREFERRED EMBODIMENTS

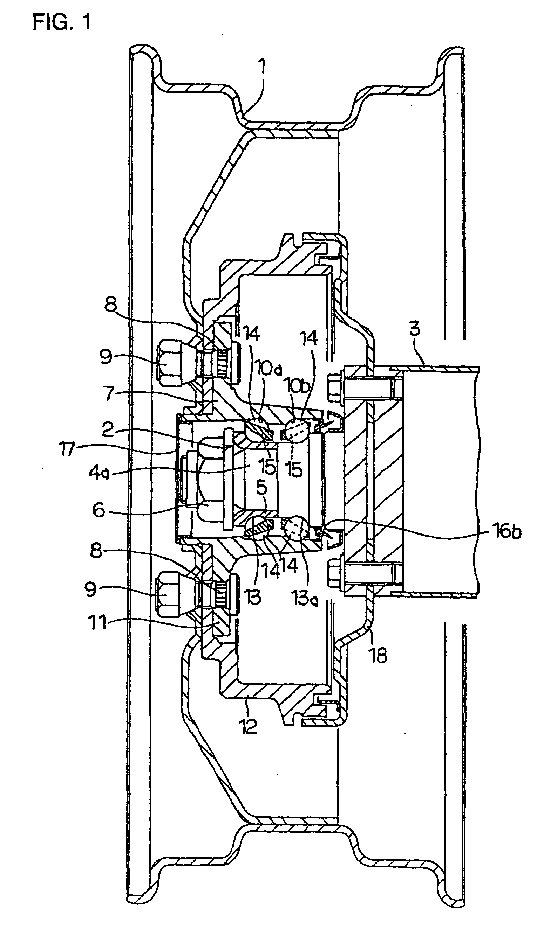

In the beginning, three exemplary structures of the rolling bearing unit for supporting a vehicle wheel of the present invention will be explained. At first, Fig. 1 shows as the first example the structure in which the rotational torque can be easily reduced, while securing necessary seal performance, by improving the structure described above with reference to Fig. 11. For this purpose, in the case of this example, the inner raceway 13a located on the inside in the axial direction is directly formed around the outer peripheral surface at the middle portion of the support shaft 4a. By this configuration, the structure enables to prevent foreign objects from entering through the fitting portion between the support shaft 4 and the inner ring 5 located on the inside as in the prior art structure shown in Fig. 11. In addition, while the outer seal ring 16a of the prior art structure shown in Fig. 11 is omitted, and only the inner seal ring 16b is provided. The rotational resistance (torque) of the inner seal ring 16b is limited within a range of 0.03 to 0.2 N·m. Foreign objects such as muddy water is prevented from entering the space in which the respective balls 14 are placed by the above seal ring 16b and the cap 17 attached to the outer opening of the hub 7. The other structure is similar as that of the prior art structure as illustrated in Fig. 11.

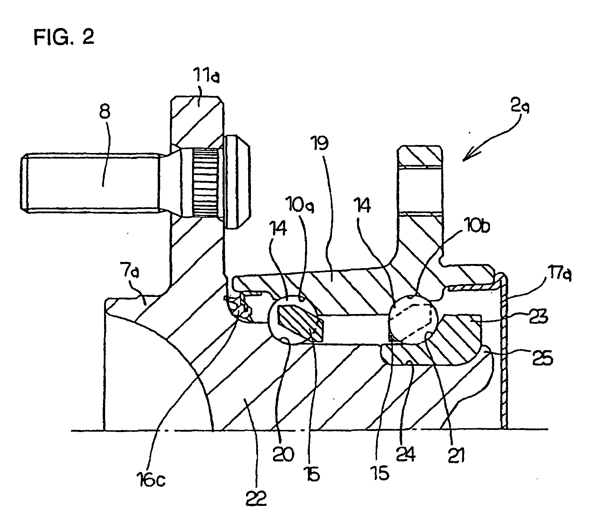

Next, Fig. 2 shows the second example of the rolling bearing according to the present invention. In this example, the structure shown in Fig. 12 is modified in accordance with the present invention. For this purpose, in the case of this example, the opening at the inside end of the outer ring 19 is closed by a cap 17a while the seal ring 16c is provided in order to close the gap between the inner peripheral surface at the outside end portion of the outer ring 19 and the outer peripheral surface at the middle portion of the hub body 22. The seal ring 16d (Fig. 12) between the inner peripheral surface at the outside end portion of the outer ring 19 and the outer peripheral surface of the inner ring 23 is omitted. The rotational resistance (torque) of the above seal ring 16c is limited within a range of 0.03 to 0.2 N·m. Foreign objects such as muddy water are prevented from entering the space in which the respective balls 14 are placed by the seal ring 16c and the cap 17a. The other structure is similar as that of the prior art structure as illustrated in Fig. 12.

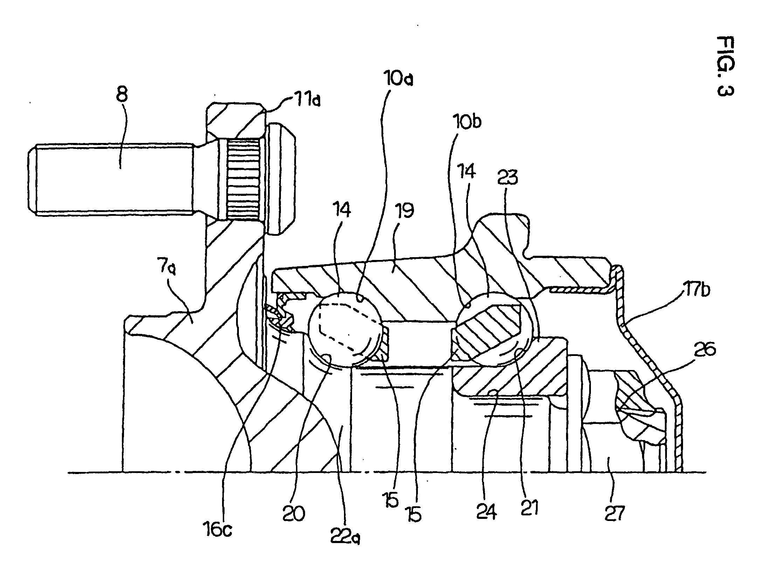

Next, Fig. 3 shows the third example of the rolling bearing unit according to the present invention. In the case of this example, the inside end surface of the inner ring 23 fitted onto the small diameter stepped portion 24 of the hub body 22a is fastened by a nut 27 threaded onto a male thread section 26 provided in the inside end of the hub body 22a. In accordance with this structure, the opening at the inside end of the outer ring 19 is closed by a cap 17b having a profile swelled out in order to avoid the interference thereof with the above male thread section 26 and the nut 27. The structures of the other elements are similar to those of the second example as described above.

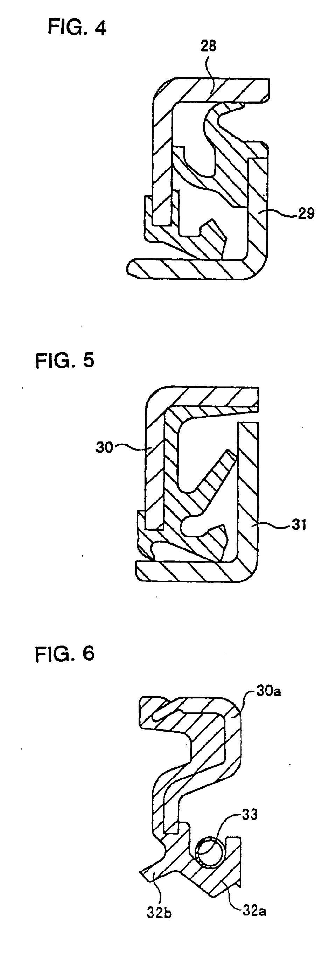

Next, seven examples of the specific structure of the seal ring according to the present invention will be explained with reference to Figs. 4 to 10. Five examples as illustrated in Figs. 4 to 8 show structures which can be used as the inner seal ring 16b in the first example of the rolling bearing unit for supporting a vehicle wheel shown in Fig. 1.

At first, the first example shown in Fig. 4 is a combinational seal ring comprising a radially outer seal ring 28 internally fitted around and fixed to the inside end of the hub 7 (Fig. 1) and a radially inner seal ring 29 fitted around and fixed to the middle portion close to the inside end of the support shaft 4a (Fig. 1), and having two seal lips on the radially inner seal ring and one seal lip on the radially outer seal ring, in total to three seal lips. In the case of this example, the torque (rotational resistance) required for relative rotation between the above radially outer and inner seal rings 28 and 29 is limited within a range of 0.03 to 0.2 N·m resulting from the friction between the tip edges of the respective three seal lips and counterpart surfaces (in the surfaces of the metal cores).

Next, the second example shown in Fig. 5 is a combinational seal ring comprising a seal ring 30 internally fitted around and fixed to the inside end of the hub 7 (Fig. 1) and a slinger 31 fitted around and fixed to the portion close to the inside end of the support shaft 4a (Fig. 1), and having three seal lips on the above seal ring 30. In the case of this example, the torque (rotational resistance) required for relative rotation between the above seal ring 30 and the slinger 31 is limited within a range of 0.03 to 0.2 N·m resulting from the friction between the tip edges of these three seal lips and the surface of the above slinger 31.

Next, the third example shown in Fig. 6 shows a seal ring 30a internally fitted around and fixed to the inside end of the hub 7 (Fig.1) and comprising two seal lips 32 a and 32b, wherein a garter spring 33 is provided such that a seal lip 32 located on the inside among the two lips comes in contact with the outer peripheral surface at the portion close to the inside end of the support shaft 4a (Fig. 1). In the case of this example, the torque (rotational resistance) required for relative rotation between the above seal ring 30a and the support shaft 4a is limited within a range of 0.03 to 0.2 N·m resulting from the friction between the tip edges of the above two seal lips 32a and 32b and the outer peripheral surface at the portion close to the inside end of the support shaft 4a.

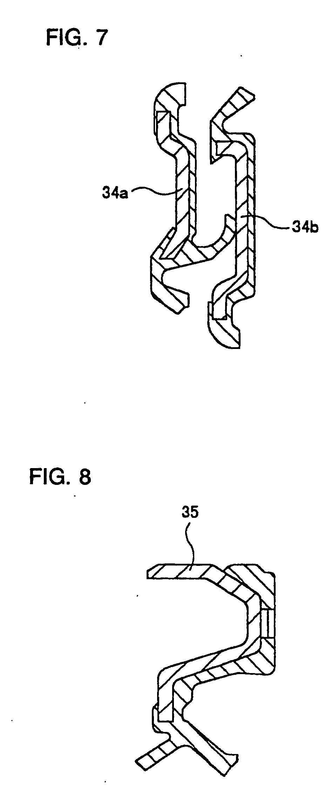

Next, the fourth example shown in Fig. 7 is a combinational seal ring comprising a seal ring 34a fitted around the inner peripheral surface at the inside end of the hub 7 (Fig. 1) and a seal ring 34b fitted around the outer peripheral surface at the portion close to the inside end of the support shaft 4a (Fig. 1). In the case of this example, there are provided three seal lips, i.e., two seal lips on the seal ring 34a fastened to the hub 7 and one seal lip on the seal ring 34b fastened to the support shaft 4a, such that the torque (rotational resistance) required for relative rotation between the hub 7 and the support shaft 4a is limited within a range of 0.03 to 0.2 N·m resulting from to the friction between the tip edges of the respective three seal lips and the counterpart surface portions (the inner peripheral surface of the hub 7, the outer peripheral surface of the support shaft 4a and the surface of the metal core).

Next, the seal ring 35 as illustrated in Fig. 8 is internally fitted around the inside end of the hub 7 (Fig. 1) and provided with two seal lips whose tip edges are arranged to come in sliding contact with the outer peripheral surface at the portion close to the inside end of the support shaft 4a (Fig. 1). In the case of this example, the torque (rotational resistance) required for relative rotation between the above seal ring 35 and the support shaft 4a is limited within a range of 0.03 to 0.2 N·m resulting from the friction between the tip edges of the above two seal lips and the outer peripheral surface of the inner end of the support shaft 4a.

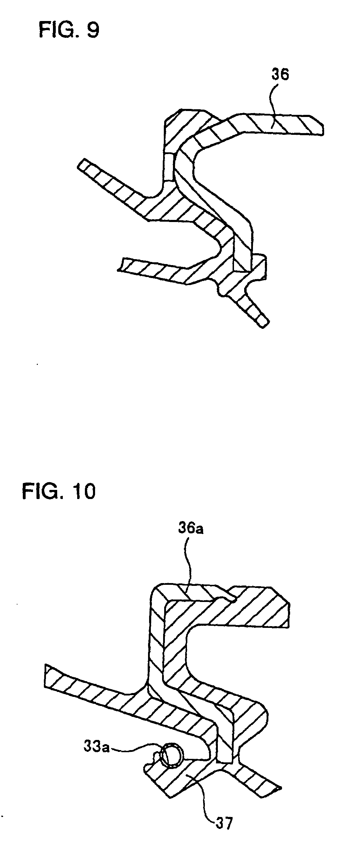

Next, the two seal rings as illustrated in Figs. 9 and 10 are applied to the second and third example of the rolling bearings unit shown in Figs. 2 and 3, which can be used as a seal ring provided between the inner peripheral surface at the outside end portion of the outer ring 19 and the outer peripheral surface at the middle portion of the hub body 22 or 22a.

At first, the seal ring 36 of the first example shown in Fig. 9 is provided with three seal lips on a metal core which can be internally fitted around and fixed to the outside end portion of the above outer ring 19 (Figs. 2 and 3) such that the tip edge of each seal lip comes in sliding contact with the inner surface of the attachment flange 11a (Figs. 2 and 3) or the curved surface continuously located between the inside surface and the outer peripheral surface of the above hub body 22 or 22a (Figs. 2 and 3). In the case of this example as discussed above, the torque (rotational resistance) required for relative rotation between the above seal ring 36 and the above hub body 22 or 22a is limited within a range of 0.03 to 0.2 N·m resulting from the friction between the tip edges of the above three seal lips and the surface of the above hub body 22 or 22a.

Next, a seal ring 36a of the second example shown in Fig. 10 is provided with three seal lips, and the intermediate seal lip 37 among the three seal lips of the seal ring 36a is pressed against the outer peripheral surface at the middle portion of the above hub body 22 or 22a (Figs. 2 and 3) by a garter spring 33a, such that the torque (rotational resistance) required for relative rotation between the above seal ring 36a and the above hub body 22 or 22a is limited within a range of 0.03 to 0.2 N·m resulting from the friction between the tip edges of the above three seal lips and the surface of the above hub body 22 or 22a.

### EXAMPLES

Next, the result of experiments conducted for confirming the advantages of the present invention will be explained. The experiments were conducted to investigate the relationship between the sealing performance and rotational resistance (seal torque) of a seal ring element by making use of 7 types of the seal ring as illustrated in Figs. 4 to 10. The adjustment of the seal torque was performed by adjusting the interference (elastic deformation) of the seal lip, changing the elastic material, and adjusting the contact condition with the counterpart surface. For each of the above seven types of seal rings, six variations of seal rings respectively having seal torques of 0 to 0.22 N·m were prepared. Then, each seal ring was installed in the rolling bearing unit for supporting a vehicle wheel shown in Fig. 1 or Fig. 2 and subjected to a muddy water immersion test. The rolling bearing unit was lubricated by inserting a grease of 10 to 14 cSt (10 to 14 × 10⁻⁶ m²/s) while the hub 7 or 7a was rotated at 200 min⁻¹ in an environment at 20°C.

The result of the experiments conducted in this manner is shown in the following table 1.

**TABLE 1**

| Rotational Resistance (N·m) | Fig.4 | Fig.5 | Fig.6 | Fig.7 | Fig.8 | Fig.9 | Fig.10 |
|---|---|---|---|---|---|---|---|
| 0 | × | × | × | × | × | × | × |
| 0.01 | Δ | Δ | × | × | × | × | Δ |
| 0.03 | ○ | ○ | ○ | ○ | ○ | ○ | ○ |
| 0.06 | ○ | ○ | ○ | ○ | ○ | ○ | ○ |
| 0.1 | ○ | ○ | ○ | ○ | ○ | ○ | ○ |
| 0.22 | ○ | ○ | ○ | ○ | ○ | ○ | ○ |

In the table 1, "×" indicates entry of a substantial amount of muddy water into the internal space filled with the grease, "Δ" indicates entry of a small amount of muddy water, and "○" indicates entry of no muddy water. From the result of these experiments, it is understood that entry of muddy water can be blocked by any type of the seal rings as long as the seal torque is at least 0.03 N·m.

Next, the experiments conducted for investigating the influence of a seal torque (rotational resistance) upon the total rotational torque of the rolling bearing unit. The experiments were conducted by installing the seal ring 36 shown in Fig. 9 into the rolling bearing unit for supporting a vehicle wheel shown in Fig. 2. Then, the seal torque was changed in five steps from 0.1 N· m to 0.3 N·m, and the rotational torque of the hub 7a of the above rolling bearing unit was observed. The rolling bearing unit was lubricated by inserting a grease of 10 to 14 cSt (10 to 14 × 10⁻⁶ m²/s) while the hub 7 or 7a was rotated at 200 min⁻¹ in an environment at 20°C.

The result of the experiments conducted in this manner is shown in the following table 2.

**TABLE 2**

| Rotational Resistance (N·m) | Rotational Torque of Whole Rolling Bearing Unit |
|---|---|
| 0.1 | Light |
| 0.2 | Light |
| 0.22 | Heavyish |
| 0.25 | Heavyish |
| 0.3 | Heavy |

As apparent from Table 2 showing the result of the experiments, the rotational torque of the above rolling bearing unit could not be maintained at a sufficiently low level if the seal torque is 0.22 N·m or more.

### INDUSTRIAL APPLICABILITY

Since the rolling bearing unit for supporting a vehicle wheel according to the present invention is constructed and operated as mentioned above, it is possible to reduce the rotational torque of a hub rotating together with a wheel and contribute to the improvement of the traveling performance represented by acceleration performance and fuel consumption performance.

## Claims

1. A rolling bearing unit comprising:
a stationary ring supported by and fixed to a suspension device when being used;
a rotating ring for fixedly supporting a wheel when being used;
a plurality of rolling members provided between stationary raceways and rotating raceways which are formed around peripheral surfaces of the stationary ring and rotating ring which face each other;
a cap for closing the entirety of an opening at one end in the axial direction of either the stationary ring or the rotating ring which is located on the radially outer side; and
a seal ring for sealing a space where the respective rolling members are placed between the peripheral surface of the stationary ring and the peripheral surface rotating ring which face each other at the other end in the axial direction opposite the cap,
the seal ring being provided with two or three seal lips each of which is made of an elastic material,
wherein the rotational resistance of said seal ring resulting from the friction between the respective seal lips and the counterpart surfaces is from

2. The rolling bearing unit for supporting a vehicle wheel of claim 1 wherein the stationary ring is an outer ring having a double-row outer raceways whose cross-sectional shape is a circular arc shape around an inner peripheral surface thereof; the rotating ring is a hub having a double-row inner raceways around an outer peripheral surface thereof; the hub is formed by combining a hub body with inner ring,
wherein an attachment flange for supporting a wheel is formed around the outer peripheral surface at an outer end portion of the hub body, a first inner raceway whose cross-sectional shape is a circular arc shape is formed around the outer peripheral surface in the middle portion of the hub body, and a small diameter stepped portion having a diameter smaller than that of the portion provided with the first inner raceway is formed around the outer peripheral surface in the middle portion close to the inner end of the hub body,
wherein an inside end surface of the inner ring fitted around the small diameter stepped portion having a second inner raceway whose the cross-sectional shape is a circular arc shape around an outer peripheral surface thereof is retained by a crimped section that is plastically deformed outward in the radial direction,
wherein balls are used as the rolling members placed between the respective outer raceways and the first and second inner raceways,
wherein the entirety of the opening at the inside end of the outer ring is closed by the cap, and the seal ring is provided between the opening section at the outside end of the outer ring and the outer peripheral surface at the middle portion of the hub body.
